# EUROPÄISCHE PATENTSCHRIFT

(11) **EP 1 761 359 B1**
(45) Veröffentlichungstag und Bekanntmachung des Hinweises auf die Patenterteilung: **14.11.2007**
(21) Anmeldenummer: 05763746.4
(22) Anmeldetag: 14.06.2005
(51) Int. Cl.: B23Q 7/04, B23Q 11/08, B23Q 7/14, B23Q 37/00

(54) **MODULARE AUTOMATIONSZELLE**
MODULAR AUTOMATION CELL
CELLULE D'AUTOMATISATION MODULAIRE

(30) Priorität: 23.06.2004 DE 102004031929
(43) Veröffentlichungstag der Anmeldung: 14.03.2007
(73) Patentinhaber: FELSOMAT GmbH & Co. KG, D-75203 Königsbach-Stein (DE)
(72) Erfinder: JAEGER, Helmut, F., 75203 Koenigsbach-Stein (DE)
(74) Vertreter: Kohler Schmid Möbus
(86) Internationale Anmeldenummer: PCT/EP2005/006358
(87) Internationale Veröffentlichungsnummer: WO 2006/000317

(56) Entgegenhaltungen:
- DE-A1- 10 144 248
- DE-A1- 19 720 906
- DE-U1- 9 318 348
- DE-U1- 29 715 000

## Beschreibung

Die vorliegende Erfindung betrifft eine modulare Automationszelle zur Lagerung und zur Handhabung von Werkstückträgern, die jeweils wenigstens ein Werkstück oder Werkzeug tragen, mit einem Zellenraum, in dem wenigstens ein Platz zur Speicherung von Werkstückträgern vorgesehen ist und in dem wenigstens eine Handhabungseinrichtung zur Handhabung von Werkstückträgern angeordnet ist, wobei der Zellenraum von einer Rückwand und einer Zellenfront umschlossen ist, die vorzugsweise eine Vorderwand und Seitenwände aufweist, wobei Werkstückträger über wenigstens eine Öffnung in der Zellenfront in den Zellenraum ein- und ausschleusbar sind und wobei die Automationszelle modular aufbaubar ist.

Eine solche modulare Automationszelle ist aus der DE 197 20 906 A1 bekannt.

Automationszellen werden im Rahmen der teil- oder vollautomatisierten Fertigung verwendet. Im einfachsten Fall ist eine einzelne solche Automationszelle einer Bearbeitungseinrichtung wie einer Werkzeugmaschine zugeordnet. Zu bearbeitende Werkstücke werden auf Werkstückträgern in die Automationszelle eingeschleust und dort zunächst gespeichert. Von dort werden einzelne Werkstücke zu der Werkzeugmaschine transportiert, beispielsweise mittels eines Portals. Bearbeitete Werkstücke werden entweder weitertransportiert (beispielsweise zu einer weiteren Werkzeugmaschine). Sie können aber auch zu der Automationszelle zurücktranspörtiert und dort wieder auf Werkstückträgern abgelegt werden.

In der Regel werden die Werkstückträger in Stapeln in die Automationszelle ein- und ausgeschleust (DE 197 20 906 A1). Die Werkstückträger können auch einzeln ein- und ausgeschleust werden, beispielsweise mittels Schubladen (DE 101 44 248 A1).

Die Übergabe von Werkstücken zu dem Portal kann erfolgen, indem ein Werkstückträger bereitgestellt wird und ein Greifer des Portals die Werkstücke unmittelbar von dem bereitgestellten Werkstückträger entnimmt. Die Bereitstellung eines Werkstückträgers kann innerhalb der Automationszelle erfolgen (DE 197 20 906 A1 sowie DE 198 24 014 A1). Die Bereitstellung kann jedoch auch außerhalb des Zellenraumes erfolgen (DE 101 44 248 A1). Auch ist es möglich, innerhalb des Zellenraumes ein Handhabungssystem (z.B. ein Linienportal oder ein Flächenportal) vorzusehen, das Werkstücke von einem Werkstückträger entnimmt und innerhalb des Zellenraumes für einen Greifer des Portals bereitstellt (DE 101 02 413 A1).

In verketteten Fertigungssystemen werden Automationszellen manchmal auch als reine Zwischenspeicher für Werkstückträger verwendet. Hierbei werden Werkstückträger in die Automationszelle eingeschleust und dort gespeichert, sowie nach Bedarf auch wieder ausgeschleust. Das Ein- und Ausschleusen der Werkstückträger erfolgt in der Regel über Werkstückträger-Portale.

Aus der bereits genannten DE 197 20 906 A1 ist es bekannt, für eine Automationszelle ein standardisiertes Sockelmodul bereitzustellen, an dem mechanische und/oder elektrische Schnittstellen vorgesehen sind, um eine modulare Bauweise zu ermöglichen. Zum Beispiel kann an dem Sockelmodul ein Seitenwandständer festgelegt werden, an dem ein Greifermodul nach der Art eines Paternosters bewegbar ist, um Werkstückträger von einem Stapel auf einen anderen Stapel bewegen zu können. Auch ist es möglich, an den Rändern des Sockelmoduls Anschlusspunkte für weitere Automationszellen vorzusehen. An dem Sockelmodul sind ferner Vertikalstreben eines Portalmoduls festgelegt.

Es ist die Aufgabe der Erfindung, eine verbesserte modulare Automationszelle anzugeben.

Diese Aufgabe wird durch eine modulare Automationszelle nach Anspruch 1 gelöst.

So ist es zum einen möglich, Automationszellen unterschiedlicher Höhe und folglich mit unterschiedlicher Speicherkapazität auf einfache und kostengünstige Weise bereitzustellen. Es ist jedoch auch möglich, bereits bestehende Automationszellen der erfindungsgemäßen Art nachträglich auf einfache Weise zu erweitern. Da die Erweiterung vertikal nach oben erfolgen kann, ist es hierbei in der Regel nicht notwendig, an der bereits bestehenden Grundzelle aufwendige Umbauarbeiten vornehmen zu müssen.

Die Rückwand ist dabei vorzugsweise als hauptsächlich tragende Wand ausgebildet. Die Zellenfront wird im einfachsten Fall ohne eigene tragende Funktion an der Rückwand eingehängt. Es kann jedoch auch vorgesehen sein, dass die Zellenfront eine gewisse Abstützungsfunktion erfüllt, um zumindest ihr Eigengewicht abzustützen.

Die erfindungsgemäße modulare Automationszelle kann so aufgebaut sein, dass die Rückwand unmittelbar an dem Fundament verankert wird. Es ist jedoch auch möglich, ein separates Sockelmodul bereitzustellen, an dem die Rückwand verankert wird.

Ferner ist es möglich, die erfindungsgemäße Automationszelle als Einzelzelle in Zuordnung zu einer Bearbeitungsstation vorzusehen, insbesondere in Verbindung mit einem Werkstückträger-Portal. Dabei ist es denkbar, dass Werkstücke von einem Portalgreifer aus dem Zellenraum geholt und wieder eingebracht werden. Es ist jedoch auch möglich, an der Außenseite des Zellenraumes eine Bereitstellstation vorzusehen, auf der Werkstückträger bereitgestellt werden, und die mit einem Portal gekoppelt ist, das Werkstücke von einem bereitgestellten Werkstückträger holt bzw. zu diesem wieder zurückbringt.

Die erfindungsgemäße Automationszelle lässt sich aufgrund ihrer Modularität demzufolge besonders flexibel verwenden.

Von besonderem Vorzug ist es, wenn die Handhabungseinrichtung an der Rückwand gelagert ist.

Dies ermöglicht, dass die Handhabung von Werkstückträgern sich allein an der Rückwand abstützen kann. Hierdurch wird es ermöglicht, die Zellenfront von etwaigen Aufgaben betreffend die Handhabung der Werkstückträger zu befreien.

Von besonderem Vorzug ist es, dass die Handhabungseinrichtung einen ersten Vertikalachsenabschnitt aufweist, an dem ein Schlitten vertikal verfahrbar ist, an dem ein Werkstückträgergreifer gelagert ist.

Dies ermöglicht eine Vertikalbewegung von Werkstückträgern innerhalb des Zellenraumes.

Von besonderem Vorteil ist es dabei, dass an der weiteren Rückwand ein weiterer Vertikalachsenabschnitt gelagert ist, der mit dem ersten Vertikalachsenabschnitt verbindbar ist, so dass der Schlitten an dem ersten und an dem weiteren Vertikalachsenabschnitt verfahrbar ist.

Mit anderen Worten wird bei einer vertikalen Erweiterung der Automationszelle durch Aufsetzen einer weiteren Rückwand so erreicht, dass auch in der vertikal erweiterten Automationszelle mittels nur eines Schlittens bzw. eines Werkstückträgergreifers die Handhabung der Werkstückträger innerhalb des Zellenraumes realisiert werden kann.

Mit anderen Worten ist der erste Vertikalachsenabschnitt an dem als Grundmodul ausgebildeten Rückwandmodul so vorgesehen, dass dieser Vertikalachsenabschnitt auf einfache Weise vertikal verlängerbar ist. Dies wird dadurch erreicht, dass der Vertikalachsenabschnitt bis zur Oberseite der Rückwand reicht.

Gemäß einer weiteren bevorzugten Ausführungsform ist an dem Schlitten eine Horizontalachse gelagert, an der der Werkstückträgergreifer gelagert ist.

Durch diese Maßnahme ist es möglich, Werkstückträger innerhalb des Zellenraumes nicht nur vertikal, sondern auch horizontal zu bewegen. Es versteht sich, dass die Horizontalachse hierbei bevorzugt parallel zu der Rückwand ausgerichtet ist.

Von besonderem Vorteil ist es, wenn die Horizontalachse eine Teleskopachse ist.

Im Gegensatz zu normalen Horizontalachsen, die sich über die gesamte Länge des horizontalen Bewegungsumfanges erstrecken, kann eine Teleskopachse in horizontaler Richtung deutlich kompakter ausgebildet werden.

Dies ist insbesondere vorteilhaft, wenn Werkstückträger nicht nur innerhalb eines Zellenraumes eines Grundmoduls zu bewegen sind, sondern auch innerhalb eines Zellenraumes eines vertikalen Erweiterungsmoduls. In dem vertikalen Erweiterungsmodul ist es dann nämlich möglich, den Zellenraum dieses Erweiterungsmoduls besser auszunutzen. Insbesondere ist es nicht notwendig, dort eine Gasse für eine Horizontalachse vorzusehen, die sich über die gesamte Länge des horizontalen Bewegungsumfanges erstreckt.

Insgesamt ist es ferner bevorzugt, wenn in dem Zellenraum vor der Rückwand wenigstens zwei Plätze zur Speicherung von Werkstückträgern seitlich nebeneinander vorgesehen sind.

Dies gilt insbesondere für das Grundmodul der erfindungsgemäßen Automationszelle. Bei zwei Plätzen kann ein Platz generell beispielsweise für das Einschleusen von Werkstückträgern vorgesehen sein, ein anderer für das Ausschleusen von Werkstückträgern aus dem Zellenraum. Bei drei Plätzen ist dies ebenfalls möglich, wobei das Ein- und Ausschleusen dann in der Regel unabhängig von der Handhabung von Werkstückträgern an den anderen Plätzen durchgeführt werden kann.

Ferner ist es von besonderem Vorteil, wenn die Rückwand im Bereich von wenigstens einem der Plätze einen zu dem Zellenraum hin vorstehenden Tragabschnitt aufweist, der sich zumindest entlang eines oberen Randbereichs der Rückwand erstreckt.

Der Tragbereich kann dabei insbesondere zur Bildung der Schnittstelle(n) der vertikalen Ergänzungs-Rückwand ausgebildet sein.

Von besonderem Vorteil ist es dabei, wenn der Tragabschnitt sich entlang eines oberen Randabschnittes und entlang eines unteren Randabschnittes erstreckt.

Bei dieser Ausführungsform ist es möglich, dass die Rückwände des Grundmoduls und des vertikalen Erweiterungsmoduls identisch ausgebildet sind.

Ferner ist es vorteilhaft, wenn sich der Tragabschnitt auch entlang eines seitlichen Randabschnittes erstreckt.

Hierbei wird an der Rückwand im Bereich des einen Platzes ein zumindest an der Außenseite umlaufender Rahmen geschaffen. Dieser kann sowohl zur erfindungsgemäßen vertikalen Erweiterung der Automationszelle dienen. Der Tragabschnitt kann hierbei jedoch auch dazu ausgelegt sein, beispielsweise die Zellenfront an der Rückwand zu befestigen. Auch kann es möglich sein, in dem Tragabschnitt elektrische Zuleitungen verdeckt zu führen. Ferner ist auf einfache Weise eine Anbindung an einen benachbart angeordneten Steuerschrank oder ähnliches möglich.

Von besonderem Vorteil ist es insgesamt, wenn der Tragabschnitt als U-Profil ausgebildet ist, das parallel zur Rückwand nach außen hin offen ist.

Hierdurch ist es zum einen auf einfache Weise möglich, Schnittstellen zwischen der Rückwand eines Grundmoduls und einer weiteren Rückwand eines Ergänzungsmoduls zu bilden. Auch ist es möglich, auf einfache Weise von außen in das U-Profil Leitungen zur Verbindung mit Steuerungs- und/oder Antriebseinheiten im Inneren des Zellenraumes zu verlegen, etc.

Es versteht sich, dass das nach außen offene U-Profil nach geeigneter Konfiguration von Zuleitungen und der Fertigkonfiguration der modularen Automationszelle abgedeckt werden kann, um ästhetischen oder sicherheitstechnischen Ansprüchen zu genügen.

Von besonderem Vorteil ist es insgesamt ferner, wenn der Tragabschnitt einen Schachtraum definiert, der zur Aufnahme von Steuerungs- und/oder Antriebseinheiten ausgelegt ist.

Bei dieser Ausführungsform wird der Tragabschnitt in synergistischer Weise dazu genutzt, an bzw. innerhalb der Rückwand einen Raum, insbesondere einen verschließbaren Raum, zu bilden, in dem unterschiedlichste Steuerungs- und/oder Antriebseinheiten angeordnet werden können. Beispielsweise kann darin ein Motor zum Antrieb der Handhabungseinrichtung angeordnet werden.

Von besonderem Vorteil ist es hierbei insbesondere, wenn die Handhabungseinrichtung einem weiteren der Plätze zugeordnet ist, insbesondere einem Platz, bei dem die Rückwand keinen Tragabschnitt aufweist.

Bei dieser Ausführungsform wird die Rückwand zum einen dazu genutzt, im Bereich von einem der Plätze die Handhabungseinrichtung zu lagern. Bei dem weiteren Platz bzw. bei weiteren Plätzen (beispielsweise links und rechts der Handhabungseinrichtung) sind hingegen Tragabschnitte vorgesehen.

Durch diese Maßnahme kann die erfindungsgemäße Automationszelle gleichzeitig stabil und in Richtung senkrecht zur Rückwand auch kompakt ausgebildet werden. In dem Bereich der Handhabungseinrichtung wird ein gewisser Bauraum senkrecht zur Rückwandebene von der Handhabungseinrichtung benötigt. Bei den anderen Plätzen wird hingegen der Tragabschnitt vorgesehen. Dieser dient zum einen der Stabilität und zum anderen der einfachen Verbindung mit Erweiterungsmodulen. Auch wird hierdurch vorteilhaft ein zusätzlicher Raum (Schachtraum) geschaffen, in dem sich Steuerungs- und/oder Antriebseinheiten unterbringen lassen.

Insgesamt ist es bevorzugt, wenn zwei oder drei seitlich vor der Rückwand nebeneinander angeordnete Plätze als Stapelplätze ausgebildet sind.

Diese Ausführungsform gilt insbesondere für das Grundmodul, das in der Regel auf einem Fundament steht (direkt oder mittels Sockel). Hierbei können Werkstückträgerstapel beispielsweise mittels Palettenwagen in die Stapelplätze eingeschleust bzw. von diesen ausgeschleust werden.

Von besonderem Vorteil ist es hierbei ferner, wenn an der weiteren Rückwand eines Ergänzungsmoduls ein Regal festgelegt ist, das wenigstens einen Speicherplatz aufweist.

Bei dieser Ausführungsform lassen sich in dem Erweiterungsmodul Werkstückträger auf dem Speicherplatz bzw. den Speicherplätzen zwischenlagern. Hierdurch wird die Pufferkapazität der Automationszelle deutlich erhöht. Beispielsweise ist es möglich, mehrere Werkstückträgerstapel zunächst über einen oder mehrere der Stapelplätze einzuschleusen, wobei die Werkstückträger dann auf die Speicherplätze des Erweiterungsmoduls verteilt werden. Durch diese Maßnahme ist auch ein längerfristiger autarker Betrieb der Automationszelle möglich.

Von besonderem Vorteil ist es hierbei, wenn das Regal neben der Handhabungseinrichtung angeordnet und zu der Handhabungseinrichtung hin offen ist, so dass Werkstückträger mittels der Handhabungseinrichtung auf einfache Weise auf dem Speicherplatz ablegbar sind.

Es versteht sich, dass es hierbei insbesondere vorteilhaft ist, wenn die Handhabungseinrichtung mit einer Horizontalachse in Form einer Teleskopachse ausgestattet ist. Dann nämlich kann die Handhabungseinrichtung die Werkstückträger in vertikaler Richtung entlang eines "Liftschachtes" in dem Erweiterungsmodul transportieren. Das Regal bzw. die Regale können dabei unmittelbar daneben an der Rückwand gelagert werden, da die Horizontalachse nur die Breite eines Platzes für Vertikalbewegungen innerhalb des Ergänzungsmoduls benötigt.

Ausführungsbeispiele der Erfindung sind in der Zeichnung dargestellt und werden in der nachfolgenden Beschreibung näher erläutert. Es zeigen:
- Fig. 1: eine perspektivische Explosionsansicht einer ersten Ausführungsform der erfindungsgemäßen Automationszelle mit zwei Plätzen;
- Fig. 2: eine perspektivische schematische Ansicht einer weiteren Ausführungsform der erfindungsgemäßen Automationszelle mit drei Plätzen;
- Fig. 3: eine schematische Schnittansicht entlang der Linie III in Fig. 2;
- Fig. 4: eine Draufsicht auf die Automationszelle der Fig. 2 in Verbindung mit einem weiteren Steuerschrank und einem Werkstück-Portal;
- Fig. 5: eine schematische Vorderansicht einer erfindungsgemäßen Automationszelle in Verbindung mit zwei Werkstück-Portalen;
- Fig. 6: eine schematische Ansicht einer weiteren erfindungsgemäßen Automationszelle, an die zwei Werkstückträger-Portale angekoppelt sind; und
- Fig. 7: eine schematische perspektivische Ansicht einer Handhabungseinrichtung für eine erfindungsgemäße Automationszelle.

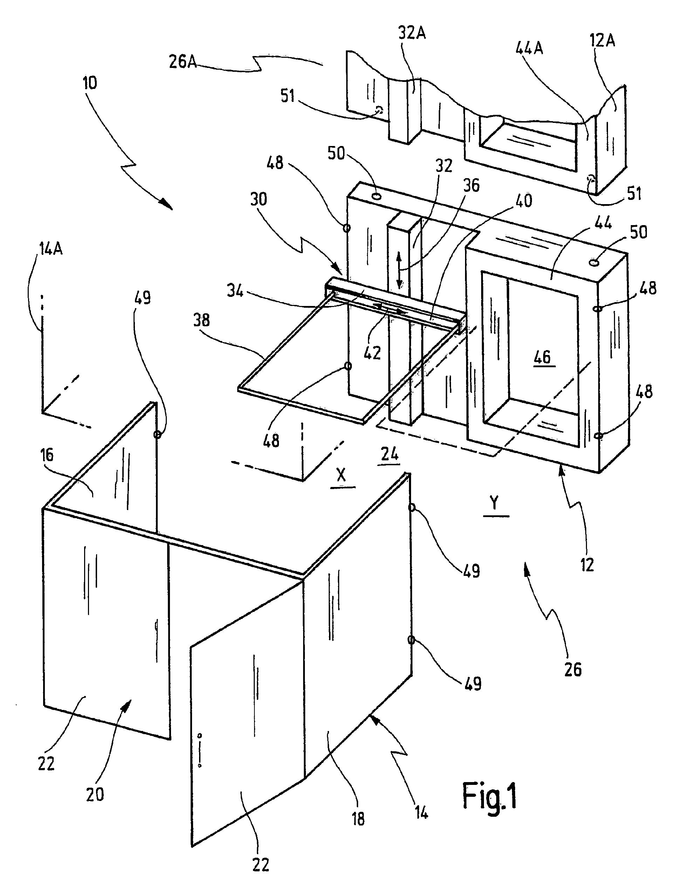

In Fig. 1 ist eine erste Ausführungsform einer erfindungsgemä-ßen Automationszelle generell mit 10 bezeichnet.

Die Automationszelle 10 weist ein erstes Rückwandmodul 12 sowie eine Zellenfront 14 auf. Die Zellenfront 14 weist eine erste Seitenwand 16 und eine zweite Seitenwand 18 sowie eine Vorderwand 20 auf, die parallel zur Rückwand 12 ausgerichtet ist.

An der Vorderwand 20 sind zwei Türen 22 vorgesehen.

Die Rückwand 12 und die Zellenfront 14 schließen einen Zellenraum 24 von angenähert Quaderform ein.

Die erste Rückwand 12 und die Zellenfront 14 sind Teil eines ersten Moduls bzw. Grundmoduls 26 der Automationszelle 10.

In dem Zellenraum 24 des Grundmoduls 26 sind vor der Rückwand 12 ein erster Platz X und ein zweiter Platz Y für Werkstückträger ausgebildet. Insbesondere lassen sich über die Türen 22 Werkstückträgerstapel auf die Plätze X, Y einschleusen bzw. von diesen ausschleusen.

Die Werkstückträger sind nach der Art von Paletten ausgebildet und tragen jeweils ein oder mehrere Werkstücke und/oder Werkzeuge. Im Folgenden wird aus Gründen einer einfacheren Darstellung davon ausgegangen, dass auf einem Werkstückträger jeweils nur Werkstücke angeordnet sind, die entweder noch in einer Bearbeitungseinrichtung wie einer Werkzeugmaschine zu bearbeiten sind oder bereits in einer solchen Bearbeitungseinrichtung bearbeitet worden sind.

An der Rückwand 12 ist eine Handhabungseinrichtung 30 für Werkstückträger gelagert. Die Handhabungseinrichtung 30 weist einen Vertikalachsenabschnitt 32 auf, an dem ein Schlitten 34 in Vertikalrichtung 36 verfahrbar ist.

An dem Schlitten 34 ist eine Horizontalachse 40 festgelegt, mittels der ein Werkstückträgergreifer 38 in Horizontalrichtung 42 an dem Schlitten 34 verfahrbar ist, wie es schematisch in Fig. 1 durch eine gestrichelte Darstellung des Werkstückträgergreifers 38 dargestellt ist.

Dabei ist die Horizontalachse 40 als Teleskopachse ausgebildet, die in der eingefahrenen (in Fig. 1 dargestellten) Stellung lediglich die Breite eines Platzes bzw. angenähert die Breite eines Werkstückträgers einnimmt. Bei der Ausführungsform der Fig. 1 ist die Handhabungseinrichtung 30 an der Rückwand 12 in direkter Zuordnung zu dem einen Werkstückträgerplatz X gelagert.

An der Rückwand 12 ist, in Zuordnung zu dem anderen Platz Y, ein zu dem Zellenraum 24 vorstehender Tragabschnitt 44 vorgesehen. Bei der Ausführungsform der Fig. 1 ist der Tragabschnitt 44 als Tragrahmen ausgebildet, der sich entlang der Oberseite, der Unterseite sowie entlang einer äußeren Seitenkante der Rückwand 12 erstreckt. Der Tragabschnitt 44 in Form eines Rahmens schließt einen Schachtraum 46 ein.

Die Tiefe (in Richtung senkrecht zur Erstreckung der Rückwand 12) des Schachtraumes 46 entspricht angenähert der Summe der Tiefen von Rückwand 12 und Vertikalachsenabschnitt 32. Dies bedeutet, dass sich der Werkstückträgergreifer 38 mittels der Teleskopachse 40 unmittelbar vor den Tragabschnitt 44 verfahren lässt.

In dem Schachtraum 46 können beispielsweise Steuerungs- und/oder Antriebseinheiten untergebracht sein, insbesondere ein oder mehrere Antriebsmotoren für die Handhabungseinrichtung 30, Steuereinrichtungen hierfür etc.

Die Rückwand 12 weist an ihren Seitenkanten Schnittstellen 48 zur Verbindung mit entsprechenden Schnittstellen 49 der Zellenfront 14 auf.

Die Rückwand 12 ist als tragende Einrichtung ausgebildet und insbesondere dazu ausgelegt, die Handhabungseinrichtung 30 zu lagern. Es versteht sich, dass die Rückwand 12 in geeigneter Weise an einem Fundament, einem Sockelmodul oder ähnlichem verankert sein muss.

Die Zellenfront 14 kann bei dieser Ausführungsform relativ leicht ausgebildet werden, da sie im Wesentlichen keine tragende Funktion erfüllen muss. Es kann allenfalls vorgesehen sein, dass die Zellenfront 14 dazu ausgelegt ist, ihr Eigengewicht abzustützen, beispielsweise im Bereich der Vorderwand 20.

Demzufolge ist es auch möglich, Türen 22 alternativ an der Vorderwand 20 vorzusehen oder an den Seitenwänden 16, 18, oder an allen Wänden 16, 18, 20 Türen zum Ein- und Ausschleusen von Werkstückträgern in den Zellenraum 24 vorzusehen.

Die Rückwand 12 weist ferner zumindest an ihrer Oberseite Schnittstellen 50 zur Verbindung mit entsprechenden Schnittstellen 51 an der Unterseite einer weiteren Rückwand 12A eines vertikalen Ergänzungsmoduls 26A auf.

Die weitere Rückwand 12A kann im Wesentlichen identisch ausgebildet sein wie die Rückwand 12 des Grundmoduls 26. So weist auch die weitere Rückwand 12A im Bereich des Platzes Y einen Tragabschnitt 44A in Form eines Rahmens auf. Ferner ist im Bereich des Platzes X an der weiteren Rückwand 12A ein weiterer Vertikalachsenabschnitt 32A vorgesehen. Der weitere Vertikalachsenabschnitt 32A dient zur Verlängerung des Vertikalachsenabschnittes 32 des Grundmoduls 26, so dass der Schlitten 34 sich in Vertikalrichtung 36 über die gesamte Länge beider Vertikalachsenabschnitte 32, 32A bewegen kann.

Das vertikale Ergänzungsmodul 26A weist in der Regel eine weitere Zellenfront 14A auf, die in Fig. 1 durch strichpunktierte Linien angedeutet ist. Die weitere Zellenfront 14 kann beispielsweise durchgehend geschlossen sein, kann jedoch auch mit Fenstern oder ähnlichem ausgestattet sein.

Ferner ist es möglich, an der weiteren Zellenfront 14 außenseitig wenigstens einen Bereitstellplatz für einen Werkstückträger vorzusehen (nicht dargestellt).

Die Automationszelle 10 gemäß der ersten Ausführungsform der Erfindung ist als modulare Automationszelle konzipiert und kann folgendermaßen konfiguriert werden.

In einer Grundkonfiguration wird die Automationszelle 10 ausschließlich mit der Rückwand 12, der Handhabungseinrichtung 30 und der Zellenfront 14 konfiguriert.

Im Betrieb dieser Grundkonfiguration wird beispielsweise ein Stapel aus Werkstückträgern, die jeweils unbearbeitete Werkstücke tragen, auf einen der Plätze X, Y (z.B. X) über eine der Türen 22 eingeschleust. Die Handhabungseinrichtung 30 kann dann den obersten Werkstückträger von dem Stapel abnehmen und in eine erhöhte Position fahren. Bei dieser Grundkonfiguration kann die Automationszelle 10 mit einem Portal für Werkstücke kombiniert werden. An dem Portal ist dann in der Regel ein Greifer vorgesehen, der Werkstücke von einem Werkstückträger entnimmt, die von der Handhabungseinrichtung 30 bereitgestellt werden. Bearbeitete Werkstücke (beispielsweise in Form von Halbfertigteilen) können dann auf dem gleichen Werkstückträger wieder abgeladen werden. Sobald der Werkstückträger nur noch bearbeitete Werkstücke enthält, kann er auf dem anderen Platz (beispielsweise Y) abgelegt werden. Dann wird ein weiterer Werkstückträger von dem Platz X geholt, die Werkstücke werden nacheinander bearbeitet, und es erfolgt wiederum eine Ablage auf dem Platz Y. Schließlich kann ein Stapel mit Werkstückträgern mit bearbeiteten Werkstücken von dem Platz Y über die entsprechende Tür 22 aus der Automationszelle 10 ausgeschleust werden.

Es versteht sich, dass zu diesem Zweck oberhalb des Zellenraumes 24 geeignete Absperrmaßnahmen vorgesehen sein können, um den Arbeitssicherheitsbestimmungen zu genügen. Ferner ist es auch möglich, an der Automationszelle 10 außen einen Bereitstellplatz für Werkstückträger vorzusehen, beispielsweise au-ßenseitig an der Seitenwand 16. In diesem Fall könnte mittels der Handhabungseinrichtung 30 ein Werkstückträger über eine geeignete Öffnung in der Seitenwand 16 zu dem Bereitstellplatz verfahren werden. In diesem Fall könnte die Automationszelle komplett von oben abgedeckt werden, und das Portal könnte Werkstücke von dem Bereitstellplatz entnehmen und wieder darauf ablegen.

Bei einer weiteren Konfiguration wird auf die Rückwand 12 eine weitere Rückwand 12A mittels der Schnittstellen 50, 51 aufgesetzt. Hierbei verlängert sich auch der vertikale Bewegungsumfang des Schlittens 34 (über dem Platz X).

Bei dieser Ausführungsform kann vor der weiteren Rückwand 12A ein Regal (über dem Platz Y) mit einem oder mehreren Speicherplätzen vorgesehen werden. Die Handhabungseinrichtung 30 kann Werkstückträger dann von Werkstückträgerstapeln auf den Plätzen X oder Y abnehmen und auf einem Speicherplatz in dem Regal (nicht dargestellt) zwischenspeichern. Hierzu fährt der Schlitten im eingefahrenen Zustand vertikal nach oben vor die weitere Rückwand 12A. Das Einspeichern von Werkstückträgern in das Regal erfolgt durch eine Horizontalbewegung mittels der Teleskopachse 40.

Ferner kann ein Bereitstellplatz bei dieser weiteren Konfigurationsmöglichkeit auch außen an dem Ergänzungsmodul 26A vorgesehen werden.

Es versteht sich, dass die Automationszelle 10 vertikal sich noch weiter erweitern lässt, beispielsweise mittels eines weiteren Ergänzungsmoduls 26B (nicht dargestellt), das oberhalb des Ergänzungsmoduls 26A angeordnet wird.

Die Handhabungseinrichtung 30 erfüllt dabei aufgrund ihrer speziellen Ausgestaltung mit Teleskop-Horizontalachse 40 sowohl die Funktion einer Stapeleinrichtung zum Umstapeln von Werkstückträgern von einem Stapel des Platzes X auf den anderen Stapel Y oder umgekehrt. Zum anderen erfüllt die Handhabungseinrichtung 30 auch den Zweck eines Vertikallifts, der sich oberhalb von einem der zwei Plätze (im vorliegenden Fall Platz X) erstreckt. Da die Horizontalachse in Form der Teleskopachse 40 lediglich etwa die Breite eines Platzes einnimmt, kann ein Regal im Bereich des anderen Platzes Y des Ergänzungsmoduls 26A unmittelbar an der Rückwand 12A gelagert werden. Hierdurch kann insgesamt eine hohe Stabilität der Automationszelle 10 erreicht werden, obgleich als wesentliches tragendes Bauteil ausschließlich die Rückwand 12 bzw. die weitere Rückwand 12A ausgebildet ist.

Die Rückwände 12, 12A können jeweils identisch ausgebildet sein. Auch die Zellenfronten 14 können generell als Rahmen identisch ausgebildet sein, wobei der Rahmen entweder mit festen Wandelementen verkleidet wird oder Türen an dem Rahmen angelenkt werden, um einen Zugang in das Innere des Zellenraumes 24 zu ermöglichen.

Ferner versteht sich, dass der Schachtraum 46 von hinten als auch von vorne abgedeckt sein kann, um einen abgeschlossenen Raum für die Steuerungs- und/oder Antriebseinheiten zu bilden.

Schließlich ist es möglich, der Automationszelle 10 einen oder mehrere Steuerschränke zuzuordnen, die vorzugsweise an einer der Seitenwände 16, 18 oder an der Rückseite der Rückwand 12 angeordnet werden. Eine Verbindung mit dem Schachtraum 46 kann beispielsweise über den Tragabschnitt 44 erfolgen, in den dann geeignete Öffnungen eingebracht werden.

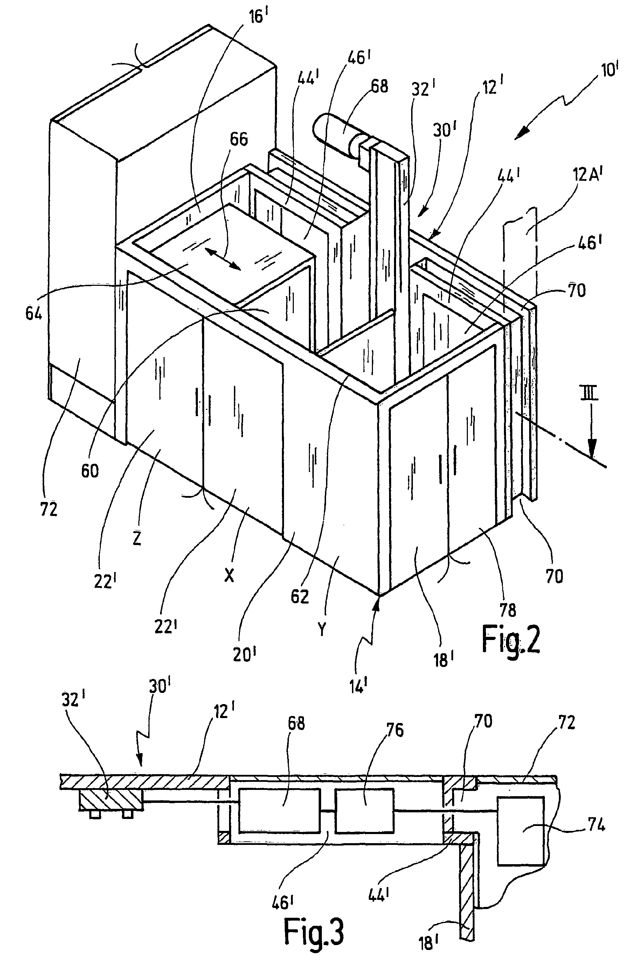

In den Figuren 2 bis 4 ist eine weitere Ausführungsform einer erfindungsgemäßen Automationszelle generell mit 10' bezeichnet.

Die Automationszelle 10' der Figuren 2 bis 4 basiert auf dem Grundkonzept der Automationszelle 10 der Fig. 1. Die Beschreibung der Automationszelle 10 hinsichtlich Aufbau und Funktionsweise gilt daher in gleichem Maße für die Automationszelle 10', sofern nicht ausdrücklich anderes erwähnt ist. Im Folgenden wird daher lediglich auf die Unterschiede eingegangen.

Die Automationszelle 10' weist im Gegensatz zu der Automationszelle 10 drei Stapelplätze X, Y und Z auf, die seitlich nebeneinander vor der Rückwand 12' angeordnet sind.

Innerhalb des Zellenraumes 24 ist eine vertikale Trennwand 60 zur Trennung der Plätze X und Z angeordnet. Eine entsprechende Trennwand zur Trennung der Plätze X und Y ist bei 62 gezeigt.

Ferner ist innerhalb des Zellenraumes ein Abdecktunnel 64 in Horizontalrichtung 66 verfahrbar. Der Abdecktunnel 64 weist etwa die Breite eines Platzes auf und dient dazu, einen der Plätze von oben (und gegebenenfalls von hinten) abzudecken. In der Darstellung der Fig. 2 ist beispielsweise der Stapelplatz Z seitlich durch die Trennwand 60 und von oben bzw. von hinten durch den Abdecktunnel 64 eingeschlossen. Daher ist es möglich, durch Öffnen der zugeordneten Tür 22' einen Werkstückträgerstapel in den Platz Z einzuschleusen bzw. von diesem auszuschleusen, ohne den Betrieb der Automationszelle 10' zu stören. Mit anderen Worten kann während des Ein- und Ausschleusens von Werkstückträgern in den Platz Z ein normaler Betrieb weiterlaufen, bei dem die Handhabungseinrichtung 30 Werkstückträger von einem der Plätze X, Y entnimmt und für ein Portal bereitstellt, etc.

Der mittlere Platz X ist der Platz, der unmittelbar vor der Handhabungseinrichtung 30 angeordnet ist. Der Platz Z ist links hiervon vorgesehen, der Platz Y rechts von dem Platz X.

Beiden Plätzen Y, Z ist an der Rückwand 12 jeweils ein Tragabschnitt 44' zugeordnet. Demzufolge sind bei der Automationszelle 10' zwei Schachträume 46' vorgesehen, die zur Aufnahme von Steuerungs- und/oder Antriebseinheiten dienen können.

Bei 68 ist schematisch ein Elektromotor zum Antrieb der Vertikalachse der Handhabungseinrichtung 30' dargestellt. Der Elektromotor 68 erstreckt sich von der Vertikalachse 32' horizontal zur Seite. Aus Gründen einer übersichtlicheren Darstellung ist der Vertikalachsenabschnitt 32' so dargestellt, dass er sich über die Oberseite der Rückwand 12' hinaus erstreckt und dass der Elektromotor 68 sich oberhalb der Oberseite der Rückwand 12' zur Seite hin erstreckt. Tatsächlich wird der Elektromotor 68 in der Regel innerhalb des (in Fig. 2 links dargestellten) Schachtraumes 46' angeordnet sein, und der Vertikalachsenabschnitt 32' wird in der Regel lediglich bis zur Oberseite der Rückwand 12' reichen. Sofern eine Automationszelle 10' von Anfang an mit einem Grundmodul und einem Erweiterungsmodul (weitere Rückwand 12A') konfiguriert wird, ist es natürlich auch möglich, die Vertikalachse 32' von Anfang an in einem Stück so auszubilden, dass sie sich über beide Rückwände 12', 12A' erstreckt. In diesem Fall könnte der Elektromotor 68' auch in einem Schachtraum der weiteren Rückwand 12A' angeordnet sein.

Wie es in Fig. 2 und insbesondere in Fig. 3 dargestellt ist, ist der Tragabschnitt 44' bei der vorliegenden Ausführungsform jeweils als U-Profil ausgebildet, das parallel zur Rückwand 12 nach außen hin offen ist. Hierdurch ist eine Nut 70 von außen zugänglich. Die Nut 70 kann in idealer Weise dazu verwendet werden, um die (in Figuren 2 und 3 nicht dargestellten) Schnittstellen 50 bzw. 51 zu realisieren. Ferner kann die Nut 70 dazu dienen, elektrische oder andere Leitungen zu verlegen.

Es versteht sich, dass die Nut 70 im Betrieb nach außen verschlossen werden kann, beispielsweise durch aufclipsbare Abdeckleisten.

In Fig. 2 ist seitlich benachbart zu der Seitenwand 16' ein Steuerschrank 72 vorgesehen. Der Steuerschrank 72 kann in an sich bekannter Weise Leistungselektronik zur Ansteuerung der Automationszelle, Steuereinrichtungen, Pneumatik- und/oder Hydraulikeinheiten etc. enthalten.

In Fig. 3 ist der Steuerschrank 72 auf der anderen Seite benachbart zu der Seitenwand 18' dargestellt. Man erkennt, dass innerhalb des Steuerschrankes 72 beispielhaft eine Steuereinrichtung 74 angeordnet ist, die mit einer Ansteuerschaltung 76 für den Elektromotor 68 verbunden ist. Der Elektromotor 68 und die Ansteuerschaltung 76 sind innerhalb des Schachtraumes 76' angeordnet. Die Verbindung zwischen dem Inneren des Steuerschrankes 72 und dem Schachtraum 46' erfolgt beispielsweise über Durchbrechungen des Bodens des U-Profils 44'.

Zu der Handhabungseinrichtung 30' kann der Schachtraum 46' durch ein einfaches Blech abgegrenzt sein. In diesem Fall erfolgt eine Verbindung zwischen dem Elektromotor 68 und der Vertikalachse 32' über eine Durchbrechung in diesem Blech.

In Fig. 2 erkennt man, dass auf die Plätze X, Z mittels zweier Türen 22' in der Vorderwand 20' zugegriffen werden kann. Zum Zugriff auf den Platz Y ist hingegen eine zweiflügelige Tür 78 an der Seitenwand 18' vorgesehen. Bei der dargestellten Konfiguration ist es auch möglich, dass sowohl das Be- als auch das Entladen von Werkstückträgern bzw. Werkstückträgerstapeln ausschließlich über die Tür 78 erfolgt. In diesem Fall sind die Türen 22' in der Vorderwand 20' lediglich als Wartungstüren vorgesehen. Bei dieser Ausführungsform versteht sich, dass dann im Inneren mittels der Handhabungseinrichtung 30' ein Umstapeln erfolgt, so dass über die Tür 78 sowohl Werkstückträger mit unbearbeiteten Werkstücken geladen werden können, als auch Werkstückträger mit bearbeiteten Werkstücken entladen werden können.

Wie bereits oben erwähnt, ist es bei der erfindungsgemäßen Automationszelle generell möglich, Türen zum Be- und/oder Entladen von Werkstückträgern in den bzw. aus dem Zellenraum 24 an beliebiger Stelle der Zellenfront 14 vorzusehen. Hierdurch werden die Möglichkeiten bei der Layoutplanung von Fertigungslinien erhöht, was einen deutlichen Vorteil darstellen kann.

So ist es alternativ auch möglich, an der Vorderwand 20' für jeden Platz eine Tür vorzusehen. Auch ist es möglich, in einer Seitenwand eine Tür zum Beladen von Werkstückträgern und in der gegenüberliegenden Seitenwand eine Tür zum Entladen von Werkstückträgern vorzusehen. Diese Anordnung von Türen lässt sich beliebig kombinieren, sowohl alternativ als auch akkumulativ. Es versteht sich dabei, dass der oder die Steuerschränke 72 ebenfalls je nach den Anforderungen des Fertigungslayouts angeordnet werden können, also an einer der beiden Seitenwände und/oder an der Rückwand.

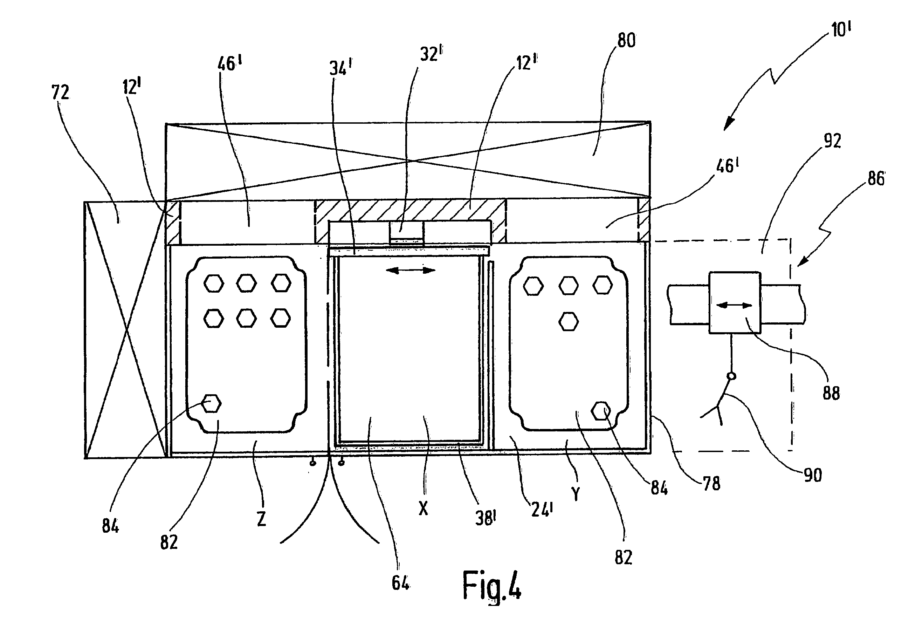

Fig. 4 zeigt eine Draufsicht auf die Automationszelle 10' der Fig. 2, wobei ein weiterer Steuerschrank 80 hinter der Rückwand 12' angeordnet ist. Die Anzahl und die Anordnung der Steuerschränke 72, 80 erfolgt je nach Anforderung.

Man erkennt auf den Plätzen Z und Y jeweils einen Werkstückträger 82, auf denen jeweils eine Mehrzahl von Werkstücken 84 angeordnet sind.

Der Abdecktunnel 64 befindet sich in der Darstellung der Fig. 4 oberhalb des Platzes X.

Der Schlitten 34' mit der Teleskopachse 40' und dem Werkstückträgergreifer 38 sind in Fig. 4 ebenfalls dargestellt, und zwar oberhalb des Platzes X bzw. oberhalb des Abdecktunnels 64. In Fig. 2 ist der Schlitten 34' aus Gründen einer übersichtlicheren Darstellung nicht gezeigt.

In Fig. 4 erkennt man ferner schematisch ein Portal 86, das einen Schlitten 88 aufweist, der in einer Richtung hin zu der Automationszelle 10 bzw. von dieser weg bewegbar ist. An dem Schlitten 88 ist ein Greifer 90 für Werkstücke 84 gelagert. Der Greifer 90 kann als einfacher Greifer oder als Doppelgreifer ausgebildet sein, wie es im Stand der Technik bekannt ist.

Zur Verbindung der Automationszelle 10' mit dem Portal 86 kann ein Bereitstellplatz für einen Werkstückträger 82 außerhalb des Zellenraums 24' vorgesehen sein, wie es schematisch bei 92 in Fig. 4 angedeutet ist.

Alternativ hierzu kann auch vorgesehen werden, dass sich das Portal 86 bis über den Zellenraum 24' erstreckt, um so Werkstücke unmittelbar aus dem Zellenraum 24' abtransportieren zu können. Dabei versteht sich, dass die Handhabungseinrichtung 30' dazu ausgelegt sein kann, jeweils einen Werkstückträger 82 in eine Bereitstellposition zu verbringen, von der aus der Greifer 90 einzelne Werkstücke 84 ergreifen kann.

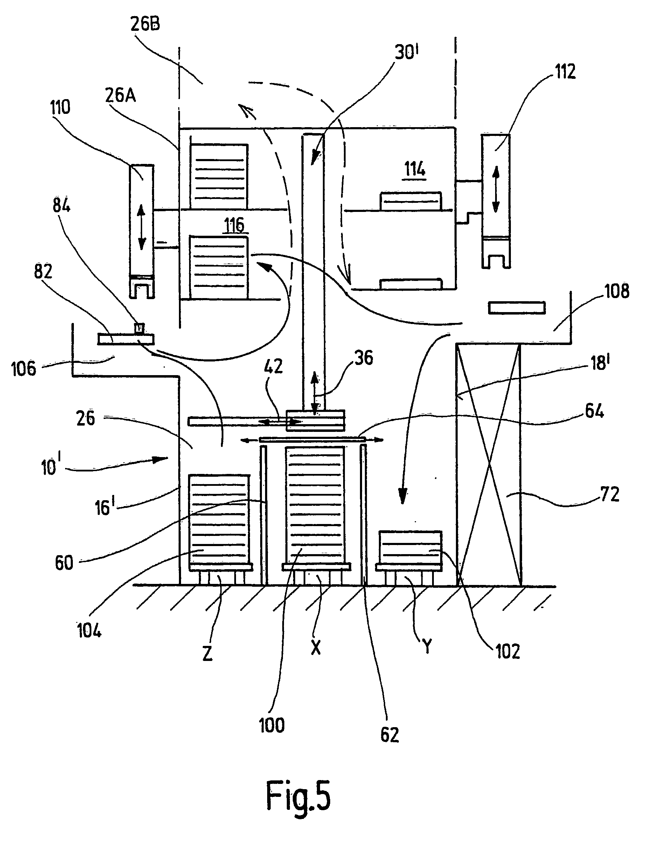

Fig. 5 zeigt eine beispielhafte Konfiguration der erfindungsgemäßen Automationszelle 10', mit einem Grundmodul 26 und einem Erweiterungsmodul 26A (und einem schematisch angedeuteten weiteren Ergänzungsmodul 26B, bei Bedarf).

In dem Grundmodul 26 ist auf dem Platz X ein erster Stapel 100 von Werkstückträgern eingestellt. Auf dem Platz Y befindet sich ein zweiter Stapel 102 und auf dem Platz Z ein dritter Stapel 104. Die Stapel können jeweils, wie es schematisch in Fig. 5 angedeutet ist, durch Palettenwagen auf die Plätze X, Y, Z eingeschleust bzw. aus diesen ausgeschleust werden.

Benachbart zu der Seitenwand 16' ist außenseitig ein erster Bereitstellplatz 106 für einen Werkstückträger vorgesehen. Auf der anderen Seite, benachbart zu der Seitenwand 18', ist ein zweiter Bereitstellplatz 108 für einen Werkstückträger vorgesehen.

Oberhalb des ersten Bereitstellplatzes 106 verläuft ein erstes Portal 110, das einen Greifer für einzelne Werkstücke 84 aufweist. Oberhalb des zweiten Bereitstellplatzes 108 verläuft ein zweites Portal 112 mit einem Greifer für einzelne Werkstücke.

Das Ergänzungsmodul 26A ist oberhalb des Platzes Y mit einem ersten Regal 114 mit zwei Speicherplätzen ausgestattet, und weist oberhalb des Platzes Z ein zweites Regal 116 mit zwei Speicherplätzen auf.

Die Handhabungseinrichtung 30' kann Werkstückträger von jedem der Stapel 100, 102, 104 entnehmen bzw. darauf ablegen. Ferner kann die Handhabungseinrichtung 30' Werkstückträger durch Bewegung parallel zur Rückwand 12 auf einem beliebigen der Speicherplätze der Regale 114, 116 zwischenlagern. Ferner ist vorgesehen, dass die Handhabungseinrichtung 30' Werkstückträger auf den Bereitstellplätzen 106, 108 ablegen kann. Gegebenenfalls sind zur Übergabe auf die Bereitstellplätze 106 jedoch noch zusätzliche Transportmittel (nicht dargestellt) vorgesehen.

In Fig. 5 ist ein typischer Arbeitsablauf durch Pfeile dargestellt. Auf dem Platz Z befindet sich ein Werkstückträgerstapel 104 mit unbearbeiteten Werkstücken. Auf dem Platz Y befindet sich ein Stapel 102 aus Werkstückträgern mit bearbeiteten Werkstücken.

Der Platz X ist durch die Seitenwände 60, 62 und den Abdecktunnel 64 abgeschottet. Im laufenden Betrieb kann demzufolge ein Stapel mit bereits bearbeiteten Werkstücken aus Platz X der Automationszelle 10 entnommen werden, und es kann ein neuer Stapel 100 mit unbearbeiteten Werkstücken darin eingeschoben werden.

Zu Beginn eines Arbeitszyklus nimmt die Handhabungseinrichtung 30' zunächst einen Werkstückträger 82 mit unbearbeiteten Werkstücken 84 von dem Stapel 104 und übergibt den Werkstückträger 82 zu dem ersten Bereitstellplatz 106. Dort werden die Werkstücke 84 einzeln mittels des Portals 110 zu einer Werkzeugmaschine verbracht und dort einem ersten Bearbeitungsgang unterzogen. So bearbeitet (als Halbfertigteile) werden die Werkstücke wieder auf dem Werkstückträger 82 abgelegt. Sobald sämtliche Werkstücke 84 des Werkstückträgers 82 bearbeitet sind, wird der Werkstückträger 82 gemäß dem dargestellten Pfeil auf einem Speicherplatz des Regals 116 (oder des Regals 114) abgelegt. Von dort wird der Werkstückträger 82 mittels der Handhabungseinrichtung 30' zu dem zweiten Bereitstellplatz 108 verfahren. Alternativ ist es, sofern die Taktzeiten der Werkzeugmaschinen, die den Portalen 110, 112 zugeordnet sind, aufeinander abgestimmt sind, auch möglich, Werkstückträger 82 unmittelbar von dem Bereitstellplatz 106 zu dem zweiten Bereitstellplatz 108 zu transportieren.

Die Halbfertigteile werden nunmehr mittels des zweiten Portals 112 entnommen und einem weiteren Bearbeitungsgang unterzogen. Die bearbeiteten Fertigteile werden dann auf dem Werkstückträger wieder abgelegt. Sobald alle Werkstücke bearbeitet sind, wird der Werkstückträger mit den bearbeiteten Fertigteilen auf dem Stapel Y abgelegt.

Die Zwischenspeicherung von Werkstückträgern 82 auf den Speicherplätzen der Regale 114, 116 (oder, wie es durch gestrichelte Linien dargestellt ist, auf Speicherplätzen von Regalen des weiteren Ergänzungsmoduls 26B) ermöglicht es, die Bearbeitung in den Werkzeugmaschinen der Portale 110, 112 voneinander zeitlich zu entkoppeln. Falls beispielsweise die Werkzeugmaschine, die dem Portal 112 zugeordnet ist, deutlich langsamer arbeitet als die Werkzeugmaschine, die dem Portal 110 zugeordnet ist, können die Halbfertigteile zunächst sämtlich auf den Speicherplätzen der Regale 114, 116 abgelegt werden, bevor sie nach und nach dem Bereitstellplatz 108 zugeführt werden.

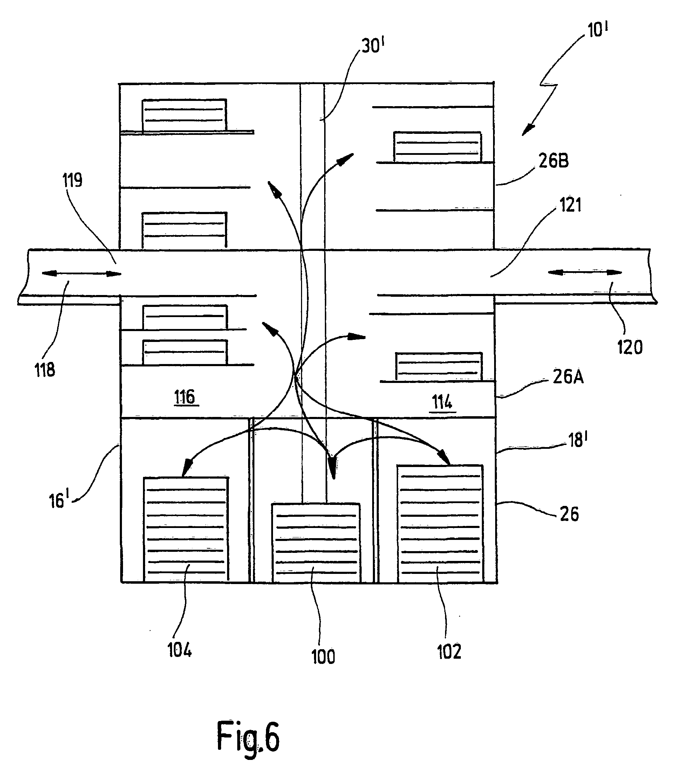

In Fig. 6 ist eine weitere Konfiguration der Automationszelle 10' dargestellt.

Bei dieser Konfiguration sind ein Grundmodul 26, ein erstes Erweiterungsmodul 26A und ein weiteres Erweiterungsmodul 26B vorgesehen.

Die Automationszelle 10' dieser Konfiguration ist mit zwei Werkstückträger-Transportsystemen 118, 120 gekoppelt. Hierzu ist in dem Erweiterungsmodul 26A bei der Seitenwand 16' eine Öffnung 119 vorgesehen, über die Werkstückträger von dem Werkstückträger-Transportsystem 118 in das Erweiterungsmodul 26A eingeschleust werden können. Dort können sie von der Handhabungseinrichtung 30' übernommen und an beliebiger Stelle innerhalb der Regale 114, 116 zwischengelagert werden. Ferner ist auch vorgesehen, dass in dem Grundmodul 26 Stapel 100, 102, 104 auf den Plätzen X, Y, Z gelegt werden. Die vielfältigen Möglichkeiten, Werkstückträger innerhalb der Automationszelle 10' zu verfahren, sind in Fig. 6 durch Pfeile angedeutet.

In entsprechender Weise ist im Bereich der Seitenwand 18' eine zweite Öffnung 121 vorgesehen, über die Werkstückträger an das zweite Werkstückträger-Transportsystem 120 übergeben werden können.

Die in Fig. 6 gezeigte Konfiguration der Automationszelle 10' eignet sich insbesondere für große, verkettete Fertigungssysteme. Die Automationszelle 10' ist in diesem Fall als reine Zwischenpufferzelle konfiguriert. Fehlteile bzw. Werkstückträger mit Fehlteilen können beispielsweise über die Stapelplätze 100, 102, 104 ein- bzw. ausgeschleust werden. Alternativ ist es auch möglich, an dem Gründmodul 26 lediglich einzelne Schubladen vorzusehen, um einzelne Werkstückträger mit fehlerhaften Teilen auszuschleusen. In diesem Fall könnten auch in dem Grundmodul 26 Regale vorgesehen sein.

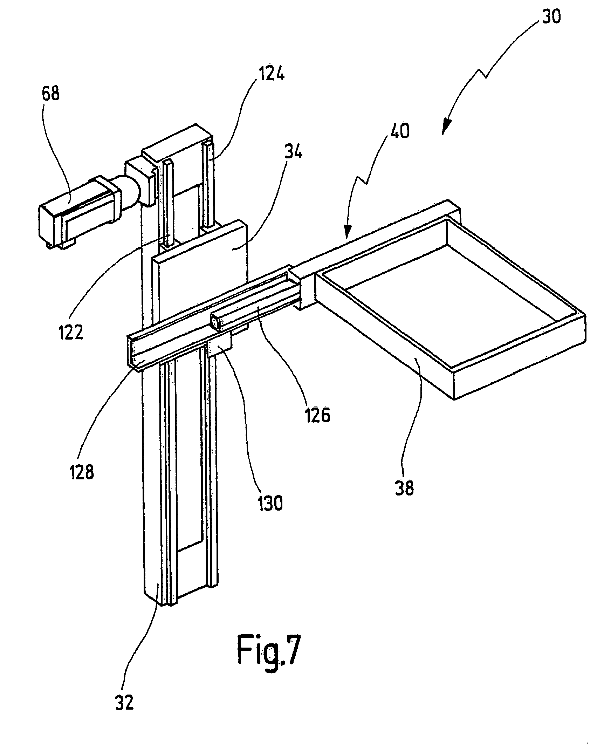

Fig. 7 zeigt eine bevorzugte Ausführungsform der Handhabungseinrichtung 30, wie sie in den Automationszellen 10, 10' verwendet wird.

Der Schlitten 34 ist an der Vertikalachse 32 mittels zweier Kugelumlaufführungen 122, 124 in vertikaler Richtung beweglich geführt. Der Elektromotor 68 ist über einen nicht näher dargestellten Zahnriementrieb mit dem Schlitten 34 verbunden, wobei sich der Zahnriementrieb im Inneren der Vertikalachse 32 erstreckt.

Die Horizontalachse 40 ist so ausgebildet, dass der Werkstückträgergreifer 38 mittels einer Kreuzrollenführung 126 an dem Schlitten 34 in Horizontalrichtung beweglich gelagert ist.

Der Antrieb des Werkstückträgergreifers 38 an dem Schlitten 34 erfolgt mittels eines Zahnstangentriebs 128. Ein Motor des Zahnstangentriebs 128 ist bei 130 gezeigt.

Von entscheidender Bedeutung ist bei der Handhabungseinrichtung 30, dass diese vertikal verlängerbar ist. Ferner ist von besonderer Bedeutung, dass die Horizontalachse 40 als Teleskopachse ausgebildet ist, die im eingefahrenen Zustand nicht wesentlich breiter ist als die Breite eines Werkstückträgers.

Durch diese Maßnahme kann die Handhabungseinrichtung 30 sowohl als Stapeleinrichtung als auch als Hublift für Werkstückträger und zum seitlichen Einlagern von Werkstückträgern in Regale verwendet werden.

## Patentansprüche

1. Modulare Automationszelle (10) zur Lagerung und zur Handhabung von Werkstückträgem (82), die jeweils wenigstens ein Werkstück (84) oder Werkzeug tragen, mit einem Zellenraum (24), in dem wenigstens ein Platz (X, Y; X, Y, Z) zur Speicherung von Werkstückträgern (82) vorgesehen ist und in dem wenigstens eine Handhabungseinrichtung (30) zur Handhabung von Werkstückträgern (82) angeordnet ist, wobei der Zellenraum (24) von einer Rückwand (12) und einer Zellenfront (14) umschlossen ist, wobei Werkstückträger (82) über wenigstens eine Öffnung (22; 22, 78; 119,121) in der Zellenfront (14) in den Zellenraum (24) ein- und ausschleusbar sind und wobei die Automationszelle (10) modular aufgebaut ist,
**dadurch gekennzeichnet, dass**
die Rückwand (12) an ihrer Oberseite und/oder an ihrer Unterseite wenigstens eine Schnittstelle (50, 51) für eine weitere Rückwand (12A) aufweist, um so die Automationszelle (10) in vertikaler Richtung modular erweitern zu können, dass die Handhabungseinrichtung (30) einen ersten Vertikalachsenabschnitt (32) aufweist, an dem ein Schlitten (34) vertikal verfahrbar ist, an dem ein Werkstückträgergreifer (38) gelagert ist, und durch eine weitere Rückwand (12A), an der ein weiterer Vertikalachsenabschnitt (32A) gelagert ist, der mit dem ersten Vertikalachsenabschnitt (32) verbindbar ist, so dass der Schlitten (34) an dem ersten und an dem weiteren Vertikalachsenabschnitt (32, 32A) verfahrbar ist.

2. Automationszelle nach Anspruch 1, **dadurch gekennzeichnet, dass** die Handhabungseinrichtung (30) an der Rückwand (12) gelagert ist.

3. Automationszelle nach Anspruch 1 oder 2, **dadurch gekennzeichnet, dass** an dem Schlitten(34) eine Horizontalachse (40) gelagert ist, an der der Werkstückträgergreifer (38) gelagert ist.

4. Automationszelle nach Anspruch 3, **dadurch gekennzeichnet, dass** die Horizontalachse (40) eine Teleskopachse (40) ist.

5. Automationszelle nach einem der Ansprüche 1 bis 4, **dadurch gekennzeichnet, dass** in dem Zellenraum (24) vor der Rückwand (12) wenigstens zwei Plätze (X, Y; X, Y, Z) zur Speicherung von werkstückträgern (82) seitlich nebeneinander vorgesehen sind.

6. Automationszelle nach Anspruch 5, **dadurch gekennzeichnet, dass** die Rückwand (12) im Bereich von wenigstens einem (Y; Y, Z) der Plätze (X, Y; X, Y, Z) einen zu dem Zellenraum (24) hin vorstehenden Tragabschnitt (44) aufweist, der sich zumindest entlang eines oberen Randbereichs der Rückwand (12) erstreckt.

7. Automationszelle nach Anspruch 6, **dadurch gekennzeichnet, dass** der Tragabschnitt (44) sich entlang eines oberen Raridabschnittes und entlang eines unteren Randabschnittes erstreckt.

8. Automationszelle nach Anspruch 7, **dadurch gekennzeichnet, dass** der Tragabschnitt (44) sich auch entlang eines seitlichen Randabschnittes erstreckt.

9. Automationszelle nach einem der Ansprüche 6 bis 8, **dadurch gekennzeichnet, dass** der Tragabschnitt (44') als U-Prof ausgebildet ist, das parallel zur Rückwand (12) nach außen hin offen ist.

10. Automationszelle nach einem der Ansprüche 6 bis 9, **dadurch gekennzeichnet, dass** der Tragabschnitt (44) einen Schachtraum (46) definiert, der zur Aufnahme von Steuerungs- und/oder Antriebseinheiten (68, 76) ausgelegt ist.

11. Automationszelle nach einem der Ansprüche 6 bis 10, **dadurch gekennzeichnet, dass** die Handhabungseinrichtung (30) einem (X) weiteren der Plätze (X, Y; X, Y, Z) zugeordnet ist, insbesondere einem Platz (X), bei dem die Rückwand (12) keinen Tragabschnitt (44) aufweist.

12. Automationszelle nach einem der Ansprüche 1 bis 11, **dadurch gekennzeichnet, dass** zwei oder drei seitliche vor der Rückwand (12) nebeneinander angeordnete Plätze (X, Y, Z) als Stapelplätze ausgebildet sind.

13. Automationszelle nach einem der Ansprüche 1 bis 12, **dadurch gekennzeichnet, dass** an der weiteren Rückwand (12A) ein Regal (114, 116) festgelegt ist, das wenigstens einen Speicherplatz aufweist.

14. Automationszelle nach Anspruch 13, **dadurch gekennzeichnet, dass** das Regal (114, 116) neben der Handhabungseinrichtung (30) angeordnet und zu der Handhabungseinrichtung (30) hin offen ist, so dass Werkstückträger (82) mittels der Handhabungseinrichtung (30) auf dem Speicherplatz ablegbar sind.

## Claims

1. A modular automation cell (10) for storing and handling pallets (82), each of which carries at least one workpiece (84) or tool, with a cell space (24) in which at least one position (X, Y; X, Y, Z) is provided for storing pallets (82), and in which at least one handling device (30) is arranged for handling pallets (82), wherein the cell space (24) is enclosed by a rear wall (12) and a cell front (14), wherein pallets (82) can be fed in and out of the cell space (24) through at least one opening (22; 22, 78; 119, 121) in the cell front (14), and wherein the automation cell (10) is of modular construction,
**characterised in that**
the rear wall (12) has on its upper side and/or lower side at least one interface (50, 51) for a further rear wall (12A), thereby enabling the automation cell (10) to be extended modularly in the vertical direction, and **in that** the handling device (30) has a first vertical shaft section (32) on which a slide (34) can be displaced vertically, on which slide is mounted a pallet grab (38), and **characterised by** a further rear wall (12A) on which is mounted a further vertical shaft section (32A) which can be connected to the first vertical shaft section (32) so that the slide (34) can be displaced on the first and on the further vertical shaft section (32, 32A).

2. The automation cell according to Claim 1, **characterised in that** the handling device (30) is mounted on the rear wall (12).

3. The automation cell according to Claim 1 or 2, **characterised in that** a horizontal shaft (40) is mounted on the slide (34), on which shaft is mounted the pallet grab (38).

4. The automation cell according to Claim 3, **characterised in that** the horizontal shaft (40) is a telescopic shaft (40).

5. The automation cell according to one of Claims 1 to 4, **characterised in that** at least two positions (X, Y; X, Y, Z) are provided side by side in the cell space (24) in front of the rear wall (12) for storing pallets (82).

6. The automation cell according to Claim 5, **characterised in that** the rear wall (12) has, in the region of at least one (Y; Y, Z) of the positions (X, Y; X, Y, Z), a support section (44) projecting towards the cell space (24), which section extends at least along one upper edge region of the rear wall (12).

7. The automation cell according to Claim 6, **characterised in that** the support section (44) extends along an upper edge section and along a lower edge section.

8. The automation cell according to Claim 7, **characterised in that** the support section (44) also extends along a lateral edge section.

9. The automation cell according to one of Claims 6 to 8, **characterised in that** the support section (44') is designed as a U-profile which is open towards the outside parallel with the rear wall (12).

10. The automation cell according to one of Claims 6 to 9, **characterised in that** the support section (44) defines a duct space (46) which is designed to receive control and/or driving units (68, 76).

11. The automation cell according to one of Claims 6 to 10, **characterised in that** the handling device (30) is assigned to one (X) additional position of the positions (X, Y; X, Y, Z), in particular a position (X) in which the rear wall (12) has no support section (44).

12. The automation cell according to one of Claims 1 to 11, **characterised in that** two or three lateral positions (X, Y, Z) arranged side by side in front of the rear wall (12) are designed as stacking positions.

13. The automation cell according to one of Claims 1 to 12, **characterised in that** a shelf (114, 116) is fastened to the further rear wall (12A), which shelf has at least one storage position.

14. The automation cell according to Claim 13, **characterised in that** the shelf (114, 116) is arranged adjacent to the handling device (30) and is open towards the handling device (30) so that the pallets (82) can be deposited in the storage position by means of the handling device (30).

## Revendications

1. Cellule d'automatisation modulaire (10) destinée au stockage et à la manipulation de porte-pièces (82) qui portent chacun au moins une pièce (84) ou un outil, comprenant un compartiment (24) dans lequel est prévu au moins un emplacement (X, Y ; X, Y, Z) pour stocker des porte-pièces (82) et dans lequel est disposé au moins un dispositif de manipulation (30) pour manipuler des porte-pièces (82), le compartiment (24) étant entouré par une paroi arrière (12) et par une façade de cellule (14), des porte-pièces (82) pouvant être introduits dans le compartiment (24) et être retirés de celui-ci par au moins une ouverture (22;22, 78 ; 119, 121) ménagée dans la façade de cellule (14), et la cellule d'automatisation (10) étant construite de façon modulaire, **caractérisée en ce que** la paroi arrière (12) présente sur sa face supérieure et/ou sur sa face inférieure au moins une interface (50, 51) pour une paroi arrière supplémentaire (12A), afin de pouvoir agrandir la cellule d'automatisation (10) de façon modulaire dans la direction verticale, **en ce que** le dispositif de manipulation (30) présente un premier segment d'axe vertical (32) sur lequel peut être déplacé un chariot (34) sur lequel est monté un organe de préhension de porte-pièces (38), et **caractérisée par** une paroi arrière supplémentaire (12A) sur laquelle est monté un segment d'axe vertical supplémentaire (32A) pouvant être assemblé avec le premier segment d'axe vertical (32), de sorte que le chariot (34) peut être déplacé sur le premier segment d'axe vertical (32) et sur le segment d'axe vertical (32A) supplémentaire.

2. Cellule d'automatisation selon la revendication 1, **caractérisée en ce que** le dispositif de manipulation (30) est monté sur la paroi arrière (12).

3. Cellule d'automatisation selon la revendication 1 ou 2, **caractérisée en ce qu'**un axe horizontal (40) est monté sur le chariot (34), sur lequel est monté l'organe de préhension de porte-pièces (38).

4. Cellule d'automatisation selon la revendication 3, **caractérisée en ce que** l'axe horizontal (40) est un axe télescopique (40).

5. Cellule d'automatisation selon l'une des revendications 1 à 4, **caractérisée en ce qu'**au moins deux emplacements (X, Y ; X, Y, Z) sont prévus l'un à côté de l'autre dans le compartiment (24), devant la paroi arrière (12), afin d'y stocker des porte-pièces (82).

6. Cellule d'automatisation selon la revendication 5, **caractérisée en ce que** la paroi arrière (12) présente dans la zone d'au moins l'un (Y , Y, Z) des emplacements (X, Y ; X, Y, Z) un segment de support (44) faisant saillie vers le compartiment (24), qui s'étend au moins le long d'une zone périphérique supérieure de la paroi arrière (12).

7. Cellule d'automatisation selon la revendication 6, **caractérisée en ce que** le segment de support (44) s'étend le long d'une zone périphérique supérieure et d'une zone périphérique inférieure.

8. Cellule d'automatisation selon la revendication 7, **caractérisée en ce que** le segment de support (44) s'étend également le long d'une zone périphérique latérale.

9. Cellule d'automatisation selon l'une des revendications 6 à 8, **caractérisée en ce que** le segment de support (44') est réalisé en tant que profilé en U ouvert vers l'extérieur et parallèle à la paroi arrière (12).

10. Cellule d'automatisation selon l'une des revendications 6 à 9, **caractérisée en ce que** le segment de support (44) délimite un compartiment technique (46) conçu pour recevoir des unités de commande et/ou d'entraînement (68, 76).

11. Cellule d'automatisation selon l'une des revendications 6 à 10, **caractérisée en ce que** le dispositif de manipulation (30) est associé à un (X) autre des emplacements (X, Y ; X, Y, Z), notamment à un emplacement (X) au niveau duquel la paroi arrière (12) ne présente pas de segment de support (44).

12. Cellule d'automatisation selon l'une des revendications 1 à 11, **caractérisée en ce que** deux ou trois emplacements latéraux (X, Y, Z) disposés côte à côte devant la paroi arrière (12) sont réalisés en tant qu'emplacements d'empilement.

13. Cellule d'automatisation selon l'une des revendications 1 à 12, **caractérisée en ce qu'**une étagère (114, 116) est fixée à la paroi arrière supplémentaire (12A), qui présente au moins un emplacement de stockage.

14. Cellule d'automatisation selon la revendication 13, **caractérisée en ce que** l'étagère (114, 116) est disposée à côté du dispositif de manipulation (30) et est ouverte en direction du dispositif de manipulation (30), si bien que des porte-pièces (82) peuvent être déposés sur l'emplacement de stockage au moyen du dispositif de manipulation (30).
